# EUROPÄISCHE PATENTSCHRIFT

(11) **EP 2 503 206 B1**
(45) Veröffentlichungstag und Bekanntmachung des Hinweises auf die Patenterteilung: **10.03.2021**
(21) Anmeldenummer: 12000300.9
(22) Anmeldetag: 19.01.2012
(51) Int. Cl.: F16L 33/207

(54) **Schlauchkupplung**
Hose coupling
Raccord de flexibles

(30) Priorität: 23.03.2011 DE 202011004259 U; 01.08.2011 DE 202011103897 U
(43) Veröffentlichungstag der Anmeldung: 26.09.2012
(73) Patentinhaber: U.M. Gewerbeimmobilien GmbH & Co. KG, 58791 Werdohl (DE)
(72) Erfinder: Schmitt, Frank, 58540 Meinerzhagen (DE)
(74) Vertreter: Patentanwälte Dörner & Kötter PartG mbB

(56) Entgegenhaltungen:
- EP-B1- 2 196 716
- WO-A1-94/23235
- DE-B- 1 164 769
- FR-A- 1 375 466

## Beschreibung

Die Erfindung betrifft eine Schlauchkupplung, insbesondere für Hochdruckschläuche, mit einem zur Aufnahme des Schlauches bestimmten Schlauchnippel, der auf seinem Außenumfang mehrere in Achsrichtung hintereinanderliegende und radial verlaufende Vertiefungen und/oder Erhöhungen trägt, mit einer den Schlauchnippel übergreifenden und den Schlauch festlegenden zylinderartigen Pressfassung, die an ihrem Innenmantel radial verlaufende Rippen aufweist sowie an ihrem einen Ende mit einem nach innen gerichteten radialen Steg versehen ist, der bei der Verpressung der Pressfassung in eine nutartige Aufnahme des Schlauchnippels eingreift.

Derartige Schlauchkupplungen werden beispielsweise bei Hydraulikleitungen verwendet, bei denen es darauf ankommt, hohen Drücke des übertragenden Mediums standzuhalten, ohne dass dabei der Schlauch bzw. die Schlauchkupplung zerbricht. Ein solcher Hochdruckschlauch ist in der Regel mehrlagig und enthält in bekannter Weise eine Metalleinlage, die für Hochdruckanwendungen notwendig ist. Eine solche Schlauchkupplung ist beispielsweise in dem Dokument DE 201 06 932 U1 gezeigt. Abhängig von der Nennweite sind diese Schlauchkupplungen jedoch nicht für den Bereich der Schwerhydraulik einsetzbar, da die Pressfassungen für die dort auftretenden Zugbelastungen nicht ausgelegt sind.

Eine Verbesserung zeigt hier eine Schlauchkupplung gemäß EP 2 196 716 B1. Die in diesem Dokument offenbarte Schlauchkupplung kann aufgrund der vorgesehenen Ausreißsicherung sehr hohe Drücke und insbesondere auch impulsartige Druckspitzen zuverlässig aufnehmen. Bei der gezeigten Ausreißsicherung ist an der Innenseite der Pressfassung eine radial abstehende Wandverformung vorgesehen, die im Befestigungsfall die von den Kunststofflagen des Schlauches befreite Metalleinlage am Schlauchnippel anpresst. Eine solche kraftschlüssige und auch formschlüssige Verbindung zwischen der metallischen Pressfassung, dem metallischen Schlauchnippel und der metallischen Einlage des Schlauches, führt zu einer sicheren und zugfesten Verbindung des Schlauches an der entsprechenden Armatur. Um für unterschiedliche Nennweiten derartige Schlauchkupplungen mit Ausreißsicherung zur Verfügung zu stellen, benötigt man Kupplungselemente mit Schlauchnippeln, welche Sicherungsbereiche mit einer Ringnut besitzen und man benötigt entsprechende Pressfassungen mit einer passenden Wandverformung. Da jedoch nicht für jeden Anwendungsfall eine Ausreißsicherung vorgesehen werden muss, sind für unterschiedliche Nennweiten und unterschiedliche Anwendungsfälle Standardnippel ohne Ausreißsicherung sowie mit Ausreißsicherung herzustellen, anzubieten und eine endsprechende Lagerhaltung vorzusehen.

Aufgabe der vorliegenden Erfindung ist es, die bisherige Situation zu verbessern und mit weniger zu lagernden Teilen für unterschiedliche Nennweiten Standardschlauchkupplungen bzw. Schlauchkupplungen mit einer Ausreißsicherung zur Verfügung zu stellen.

Diese Aufgabe wird mit einer Schlauchkupplung mit den Merkmalen des Anspruchs 1 gelöst, nämlich mit einer Schlauchkupplung bestehend aus einem Hochdruckschlauch, einem rohrartigen Kupplungselement mit einem Standard-Schlauchnippel, einer unter radialem Druck verformbaren Pressfassung sowie einem weiteren Bauteil, welches eine nachrüstbare Ausreißsicherung darstellt. Auf diese Weise wird eine Standardschlauchkupplung sowohl im normalen Hochdruckbereich als auch zusammen mit der montierten Ausreißsicherung für höchste Drücke und impulsartige Druckspitzen anwendbar. Die Erfindung reduziert die herzustellenden und zu lagernden Bauteile für Schlauchkupplungen unterschiedlicher Nennweiten und Anwendungsfälle, da ein Kupplungselement mit einem Standard-Schlauchnippel sowohl für Standardanwendungen als auch mit der nachrüstbaren Ausreißsicherung für höchste Drücke einsetzbar ist. So muss nur noch ein Kupplungselement für eine Nennweite zur Verfügung gestellt werden.

Bei der neuen nachrüstbaren Ausreißsicherung handelt es sich um einen nachrüstbaren, beispielsweise auf den Schlauchnippel aufschiebbaren und am Schlauchnippel fixierbaren metallischen Ausreißsicherungsring, welcher aus einem zylindrischen Abschnitt besteht. Dieser zylindrische Abschnitt kann aus einem geschlossenen Ring, aus einem offenen Ring, aus mehreren Ringschalenstücken oder einer Spiralfeder bestehen. An der Außenseite des zylindrischen Abschnitts ist eine ringförmige Umfangsnut eingeformt, die beim radialen Verpressen zur Aufnahme von Material der Metalleinlage des Schlauches dient und an der Schlauchkupplung gegenüberliegend zu einer ersten Rippe der Pressfassung abgeordnet ist, um eine formschlüssige Verbindung zwischen der Pressfassung, der Metalleinlage des Schlauches und der Ausreißsicherung zu ermöglichen.

Damit sich der auf den Schlauchnippel aufgeschobene Ausreißsicherungsring beim radialen Verpressen nicht in Längsrichtung auf dem Schlauchnippel verschiebt, wird dieser Ausreißsicherungsring am Schlauchnippel positioniert und in seiner Lage fixiert. Hierfür werden Haltemittel, insbesondere formschlüssig und/oder kraftschlüssig wirkende Haltemittel, am Ausreißsicherungsring vorgesehen.

Bei einer ersten Ausführungsform sind für eine solche Positionierung Haltemittel am Ausreißsicherungsring vorgesehen, die vorzugsweise einstückig, d.h. integral, mit dem zylindrischen Abschnitt des Ausreißsicherungsrings ausgebildet sind. Diese Haltemittel werden bei einer bevorzugten Ausführungsform an der Innenseite des Ausreißsicherungsrings vorgesehen, um zur Positionierung mit entsprechenden Mitteln des Schlauchnippels zusammenwirken zu können. Ein Schlauchnippel ist am hinteren Ende des rohrartigen Kupplungselements vorgesehen. Am vorderen Ende ist das Kupplungselement an eine Armatur anschließbar. Der Schlauchnippel weist zur Aufnahme des Hochdruckschlauchs an seinem Außenumfang mehrere in Achsrichtung hintereinanderliegende radial verlaufende Vertiefungen und zwischen den Vertiefungen zum Hochdruckschlauch gerichtete rippenartige Erhöhungen aus. Für die Positionierung des Ausreißsicherungsrings wird eine am Schlauchnippel vorhandene Vertiefung und/oder Erhöhung genutzt, vorzugsweise ausgehend vom vorderen Ende des Kupplungselementes die erste Vertiefung am Schlauchnippel. Die vorgenannten Haltemittel des Ausreißsicherungsrings können ein oder mehrere radial nach innen gerichtete Vorsprünge oder Nuten umfassen. In einfachster Weise wird eine radial nach innen gerichtete umlaufende Rippe als Haltemittel am Ausreißsicherungsring vorgesehen. Besteht der zylindrische Abschnitt des Ausreißsicherungsrings aus einem geschlossenen Ring, so kann die als Haltemittel vorgesehene Rippe beim radialen Verpressen in die erste Vertiefung des Schlauchnippels umfangsseitig eingreifen. Die Positionierung und Festlegung dieses Ausreißsicherungsrings kann einerseits zusammen mit dem radialen Verpressen der Pressfassung vorgenommen werden. In dem Fall, wo ein Ausreißsicherungsring vormontiert am Schlauchnippel geliefert werden soll, kann dieser Ausreißsicherungsring andererseits auch vorab durch radiales Verpressen am Schlauchnippel fixiert werden.

Bei einer weiteren Ausführungsform sind für eine Positionierung kraftschlüssig wirkende Haltemittel am Ausreißsicherungsring vorgesehen. Wird beispielsweise ein magnetisierter Ausreißsicherungsring auf den Schlauchnippel aufgeschoben und zwar bis er an die Schulter des Kupplungselements anschlägt, bleibt er aufgrund der magnetischen Anziehung an der metallischen Schulter anliegend fixiert.

Bei einer weiteren Ausführungsform, wo der zylindrische Abschnitt des Ausreißsicherungsrings aus einem geschlitzten Ring besteht, können zur Positionierung und Festlegung des Ausreißsicherungsrings am Schlauchnippel des Kupplungselementes ebenfalls Haltemittel in Form von ein oder mehreren radial nach innen gerichtete Vorsprünge oder Nuten vorgesehen werden. Ein solcher geschlitzter Ring muss zur Montage jedoch nicht auf das Kupplungselement aufgepresst werden. Besteht der Ring aus einem elastischen Material, kann der Ring zum Aufschieben auf den Schlauchnippel aufgeweitet werden. Ist die gewünschte Position erreicht, kann sich der Ring wieder in seine Ursprungsform zurück bewegen und sich an einer oder mehreren vorgesehenen Vertiefungen und/oder Erhöhungen am Schlauchnippel verklemmen. Gleiches gilt für eine Spiralfeder.

Bei einer weiteren Ausführungsform wird der geschlitzte Ring ohne zusätzliche Haltemittel vorgesehen und in gleicher Weise, wie vorbeschrieben, am Schlauchnippel des Kupplungselementes montiert. Die Fixierung eines geschlitzten Ringes erfolgt vorzugsweise über eine form- und/ oder kraftschlüssige Verbindung.

Bei einer weiteren Ausführungsform besteht der zylindrische Abschnitt des Ausreißsicherungsrings aus mehreren Ringschalenstücken, vorzugsweise aus zwei Halbschalenstücken. Zur Positionierung und Festlegung der Ringschalenstücke des Ausreißsicherungsrings am Schlauchnippel des Kupplungselementes können diese durch eine stoffschlüssige Verbindung am Schlauchnippel fixiert werden. Dies kann eine Klebeverbindung oder auch eine Schweiß- oder Lötverbindung sein.

Ein geschlossener Ring besteht aus einem Metallmaterial, vorzugsweise aus einer Stahllegierung und kann durch spanlose oder spanende Umformverfahren aus einem Rohrabschnitt hergestellt werden, beispielsweise durch Drehen, Tiefziehen oder Hydroformen.

Ein geschlitzter Ring besteht aus einem elastischen Material, beispielsweise aus Metall, bevorzugt aus vergütetem Stahl, wie z.B. Federstahl. Er wird als Ring durch spanlose oder spanende Umformverfahren aus einem Rohrabschnitt hergestellt, beispielsweise durch Drehen, Tiefziehen oder Hydroformen, anschließend vergütet, so dass er seine elastischen Eigenschaften erhält und nachfolgend geschlitzt, beispielsweise durch Erodieren. Das Erodieren ermöglicht eine genaue Schlitzbreite im Ring vorzusehen. Ein solcher Ring kann auch aus einem anderen elastischen Material, wie beispielsweise hochfestem Kunststoff bestehen, vorzugsweise aus Polyetheretherketon (PEEK).

Ringschalenstücke können aus Metall oder hochfestem Kunststoff bestehen.

Der Ausreißsicherungsring besitzt an der Außenseite seines zylindrischen Abschnitts eine Umfangsnut. Bei einer weiteren Ausführungsform der Ausreißsicherung wird am Ausreißsicherungsring mehr als eine Umfangsnut vorgesehen.

Die Befestigungslage der neuen Schlauchkupplung mit Ausreißsicherungsring wird in gleicher Weise wie bei bekannten Schlauchkupplungen erzielt. Der Hochdruckschlauch, bei dem zwischen zwei Kunststoffmäntel eine Metalleinlage aus einem Drahtgeflecht oder aus mindestens einer Drahtspiralenwicklung angeordnet ist, wird an einem Ende von seinem Innen- und Außenmantel aus Kunststoff befreit und dieses Ende des Schlauches wird in die Pressfassung eingeführt und zusammen mit der Pressfassung auf den Schlauchnippel mit dem vormontierten Ausreißsicherungsring aufgeschoben. Schließlich wird durch äußeren radialen Druck die Pressfassung radial verpresst. Bei einem geschlossenen zylindrischen Abschnitt als Ausreißsicherungsring sind Haltemittel vorhanden. Bereits im Anfangsstadium des Pressvorgangs wird mittels der Haltemittel des Ausreißsicherungsrings eine Fixierung dieses Ausreißsicherungsrings am Schlauchnippel erzielt und damit der Ausreißsicherungsring am Schlauchnippel in seiner vorgesehenen Lage positioniert. Bei anderen Ausführungsformen des Ausreißsicherungsrings sind diese bereits vor dem Verpressen am Schlauchnippel fixiert. Beim radialen Verpressen wird die Metalleinlage des Schlauchs durch eine Rippe der Pressfassung in die Umfangsnut der Ausreißsicherung gedrückt und es kommt nachfolgend zu einer kraft- und formschlüssigen Verbindung zwischen der metallischen Pressfassung, der Metalleinlage des Schlauchs, der gegebenenfalls metallischen Ausreißsicherung und dem metallischem Schlauchnippel. Die metallischen Bauteile der Verbindung können durch die Presskraft metallisch verschweißen. Dies führt zu einer sicheren und zugfesten Verbindung des Schlauches an der Schlauchkupplung.

Der Bereich der Schlauchkupplung, wo am Schlauchnippel der Ausreißsicherungsring vorgesehen ist, wird nachfolgend Sicherungsbereich genannt. Der Anschlussbereich für den Hochdruckschlauch in der Schlauchkupplung umfasst zwei Bereiche, nämlich den vorbeschriebenen vorderen Sicherungsbereich mit der Ausreißsicherung und einen sich in Axialrichtung anschließenden Dichtbereich. Im Dichtbereich wird vom Hochdruckschlauch vorzugsweise der äußere Kunststoffmantel abgeschält, so dass beim radialen Verpressen die Rippen der Pressfassung in die Metalleinlage eingreifen und die Erhöhung am Schlauchnippel sich in den Innenmantel des Schlauches einpressen können. Die am Innenmantel der Pressfassung vorgesehenen radial nach innen gerichteten Rippen können unterschiedlich ausgebildet sein, vorzugsweise ist die Rippe oder sind die Rippen im Sicherungsbereich größer dimensioniert als die Rippen im Dichtbereich.

In der Zeichnung ist der erfindungsgemäße Gegenstand in zwei Ausführungsbeispielen dargelegt und zwar zeigt:
- Fig. 1: eine erfindungsgemäße Schlauchkupplung in Befestigungslage,
- Fig. 2: das Kupplungselement von Fig. 1 und den separaten Ausreißsicherungsring,
- Fig. 3: das Kupplungselement von Fig. 1 mit aufgeschobenem Ausreißsicherungsring,
- Fig. 4: die Schlauchkupplung von Fig. 1 vor der Montage,
- Fig. 5: die montierte Schlauchkupplung von Fig. 1 vor dem Verpressen,
- Fig. 6: eine weitere erfindungsgemäße Schlauchkupplung in Befestigungslage,
- Fig. 7: das Kupplungselement von Fig. 6 vor der Montage,
- Fig.: 8 das Kupplungselement von Fig. 6 während der Montage,
- Fig. 9: das Kupplungselement von Fig. 6 mit aufgeschobenem Ausreißsicherungsring,
- Fig. 10: die montierte Schlauchkupplung von Fig. 6 vor dem Verpressen.

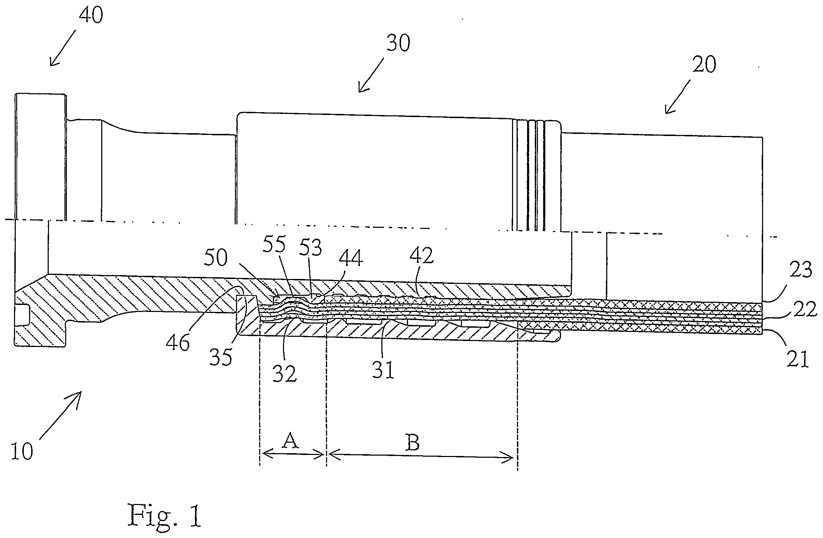

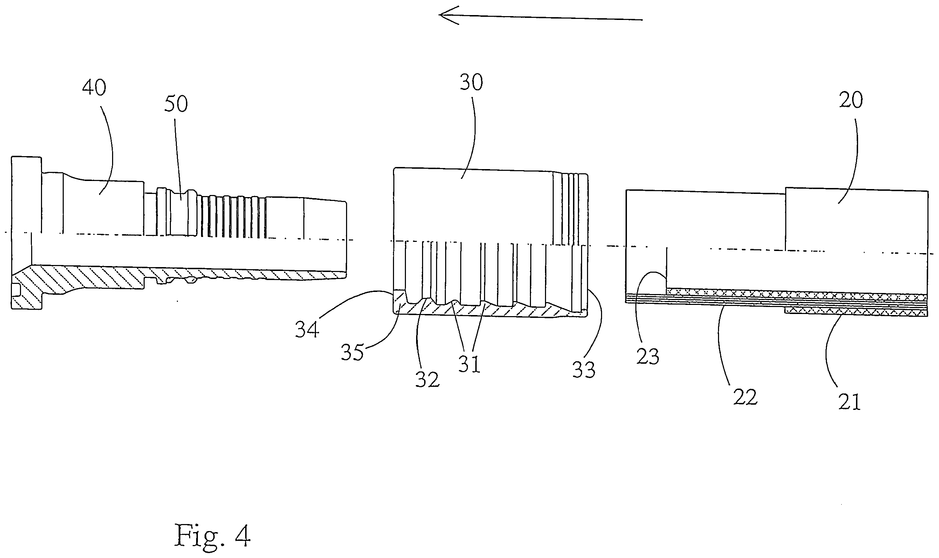

In den Fig. 1 bis Fig. 5 ist eine Ausführungsform der erfindungsgemäßen Schlauchkupplung 10 gezeigt. Sie besteht aus einem Kupplungselement 40, einer Pressfassung 30 und einem Ausreißsicherungsring 50. An diese Schlauchkupplung 10 ist ein Hochdruckschlauch 20 angeschlossen. Dieser Hochdruckschlauch 20 ist mit einem inneren und äußeren Kunststoffmantel 21, 23 versehen, welche eine Metalleinlage 22 bedecken. Ein solcher Hochdruckschlauch 20 ist für sehr hohe Drücke und hohe Impulslasten einsetzbar. Wie in Fig. 1 zu sehen, ist der Hochdruckschlauch 20 an seinem Ende innen und außen geschält, d.h. besitzt in diesem vorderen Bereich der Schlauchkupplung 10, der als Sicherungsbereich A bezeichnet wird, keinen äußeren Kunststoffmantel 21 und keinen inneren Kunststoffmantel 23, sondern besteht ausschließlich aus der Metalleinlage 22. In dem sich anschließenden Dichtbereich B ist der Hochdruckschlauch 20 von seinem äußeren Kunststoffmantel 21 befreit. Der so vorbereitete Hochdruckschlauch 20 wird zusammen mit einer den Hochdruckschlauch 20 umgreifenden Pressfassung 30 auf den Schlauchnippel 41 des Kupplungselements 40, wie in Fig. 4 durch den Pfeil angedeutet, aufgeschoben.

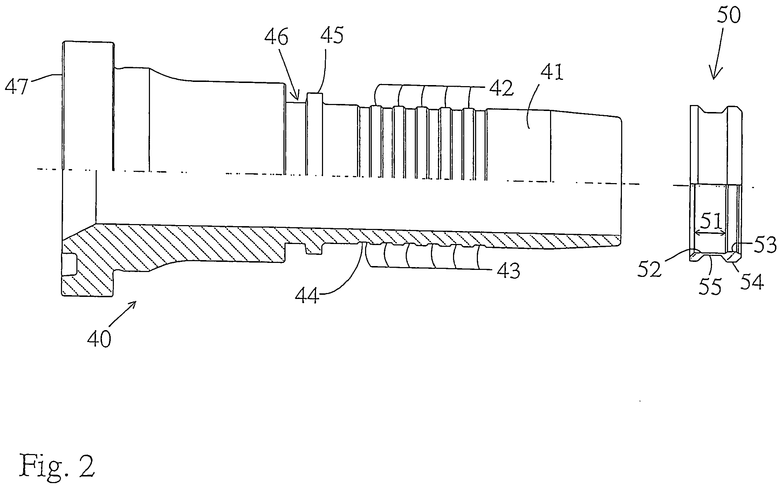

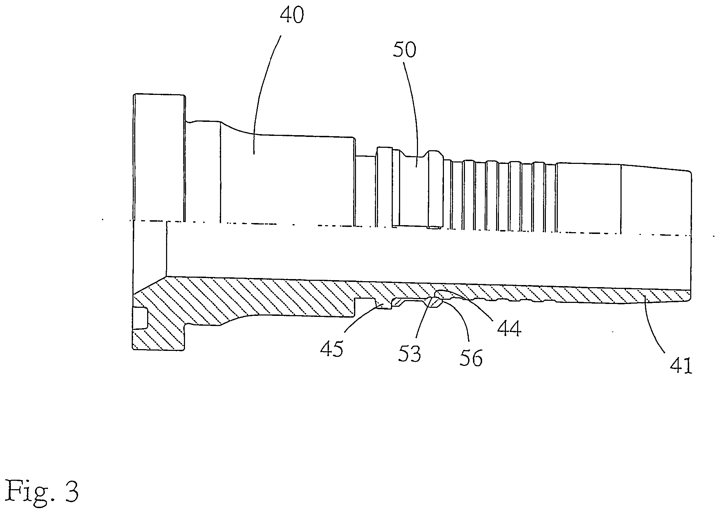

Bei dem Kupplungselement 40 handelt es sich um ein bekanntes Kupplungselement 40 für Standardanwendungen, siehe Fig. 2. Am vorderen Ende 47 kann das Kupplungselement 40 an einer gewünschten Armatur festgelegt werden, beispielsweise mit einer nicht gezeigten Überwurfmutter. Am anderen hinteren Ende besitzt das Kupplungselement 40 einen Schlauchnippel 41. Dieser trägt an seiner äußeren Oberfläche eine Strukturierung in Form von Rippen 42 und Vertiefungen 43. Die Rippen 42 drücken sich beim Aufschieben des Hochdruckschlauches 20 in dessen inneren Mantel 23 ein. Die vom vorderen Ende 47 aus gesehen erste Vertiefungen 44 der an der äußeren Oberfläche vorgesehenen Vertiefungen 43 wird in diesem Ausführungsbeispiel zur Positionierung des Ausreißsicherungsrings 50 verwendet. Es ist auch möglich, dass mehrere Vertiefungen zur Fixierung des Ausreißsicherungsrings 50 herangezogen werden. Der in Fig. 2 neben dem Kupplungselement 40 dargestellte Ausreißsicherungsring 50 besitzt zu seiner Positionierung am Schlauchnippel 41 an seiner Innenseite 52 Haltemittel 53. Diese Haltemittel 53 bestehen in diesem Fall aus einer radial nach innen gerichteten umlaufenden Rippe, die wie aus Fig. 3 zu ersehen, beim Aufschieben des Ausreißsicherungsrings 50 auf den Schlauchnippel 41 in die erste Vertiefung 44 eingedrückt werden kann. Dies ist möglich, da sich der Ausreißsicherungsring 50 beim Aufschieben auf den Schlauchnippel 41 durch Anlage an der Schulter 45 des Kupplungselements 40 so positioniert, dass die Haltemittel 53 gegenüberliegend zur ersten Vertiefung 44 angeordnet sind. Der Innendurchmesser des Ausreißsicherungsrings 50 wird durch den Innendurchmesser der als Haltemittel 53 dienenden Rippe bestimmt. Dieser Innendurchmesser ist an den Außendurchmesser des Schlauchnippels 41 angepasst und zwar in der Weise, dass der Ausreißsicherungsring 50 leicht auf den Schlauchnippel 41 aufgeschoben werden kann, bis er mit seiner vorderen Stirnseite an der Schulter 45 anliegt, wie in Fig. 3 gezeigt. Der gezeigte Ausreißsicherungsring 50 besitzt des Weiteren an seiner Außenseite 54 eine Umfangsnut 55. Für größere Schlauchkupplungen können auch Ausreißsicherungen mit mehr als einer Umfangsnut vorgesehen werden. Ist der Ausreißsicherungsring 50, wie in Fig. 3 gezeigt, auf dem Schlauchnippel 41 aufgeschoben, so ist das Kupplungselement 40 vergleichbar mit einem Kupplungselement 40 mit integral ausgebildeter, d.h. eingeformter Ausbauchung für eine Ausreißsicherung. In gleicher Weise ist benachbart zur Schulter 45 eine Umfangsnut 55 vorgesehen, wobei diese Umfangsnut 55 von zwei Schultern begrenzt wird, die radial vom Kupplungselement 40 abstehen und so groß dimensioniert sind, dass sie die Rippen 42 des Schlauchnippels 41 wesentlich überragen.

Wenn man ein solches Kupplungselement 40 mit Ausreißsicherung 50 vormontiert liefert, kann durch geringfügige radiale Druckausübung auf den Ausreißsicherungsring 50 dieser am Schlauchnippel 41 fixiert werden. Zur Herstellung der Befestigungslage der Schlauchkupplung ist eine solche Vorfixierung jedoch nicht notwendig.

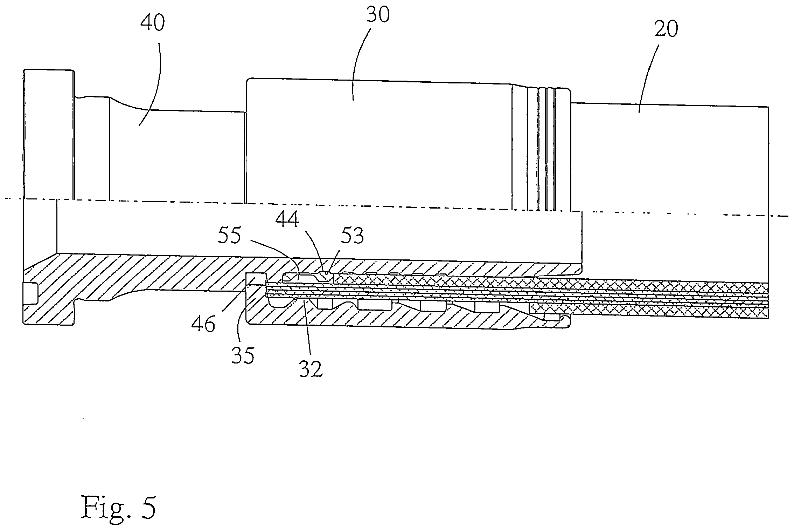

Zur Erzielung der Befestigungslage der Schlauchkupplung 10 wird, wie in Fig. 4 gezeigt, der vorbereitete Hochdruckschlauch 20 in die Pressfassung 30 eingeführt und zusammen mit der Pressfassung 30 auf den Schlauchnippel 41, der bereits mit dem Ausreißsicherungsring 50 versehen ist, aufgeschoben. Diese Montagelage ist in Fig. 5 gezeigt. Der Hochdruckschlauch 20 ist zusammen mit der Pressfassung 30 soweit auf das Kupplungselement 40 aufgeschoben, bis ein nach innen gerichteter Kragen 35 am vorderen Ende 34 der Pressfassung 30 in Höhe einer Umfangsnut 46 des Kupplungselements 40 positioniert ist. Der Hochdruckschlauch 20 lässt sich bis an diesen Kragen 35 der Pressfassung 30 schieben und der freigeschälte Hochdruckschlauch 20, nämlich die Metalleinlage 22, liegt auf den radial abragenden Schultern des Ausreißsicherungsrings 50, die die Umfangsnut 55 begrenzen, auf. Gegenüberliegend zur Umfangsnut 55 ist eine erste Rippe 32 der Pressfassung 30 angeordnet. In der Fig. 4 ist die Pressfassung 30 in ihrer Ursprungsform besser zu sehen. Sie besitzt ausgehend von dem vorderen Ende 34, wo der nach innen gerichtete Kragen 35 vorgesehen ist, an der Innenseite eine Strukturierung in Form von in axialen Abstand angeordneten radialen Rippen 31, 32. Ausgehend vom vorderen Ende 34 ist die erste Rippe 32 eine größer dimensionierte Rippe, die sich in der Befestigungslage der Schlauchkupplung 10 - siehe Fig. 1 - im Sicherungsbereich A befindet. Die weiteren Rippen 31 befinden sich in Befestigungslage im Dichtbereich B. Die Rippen 31, 32 sind vorzugsweise zahnartig ausgebildet, um sich beim radialen Verpressen leicht in den Hochdruckschlauch 20 einpressen zu können. Es ist selbstverständlich auch möglich, die Rippen 31,32 spiralförmig vorzusehen.

Wird nun die in Fig. 4 gezeigte Schlauchkupplung, die vormontiert ist, in die Befestigungslage gemäß der Darstellung von Fig. 1 überführt, d.h. wird auf die Pressfassung 30 in einer Spezialpresse gleichmäßig radial ein Druck ausgeübt, greifen die Rippen 31 im Dichtbereich B in die Metalleinlage 22 des Hochdruckschlauchs 20 ein und drücken den Hochdruckschlauch 20 gegen den Schlauchnippel 41, der mit seinen Rippen 42 in den Innenmantel 23 des Hochdruckschlauchs 20 drückt. Beim radialen Verpressen zur Befestigung der Pressfassung 30 am Schlauchnippel 21 wird gleichzeitig der Ausreißsicherungsring 50 am Schlauchnippel 41 fixiert, indem das Haltemittel 53 in die erste Vertiefung 44 am Schlauchnippel 41 eingreift. Auf diese Weise wird ein axiales Verschieben des Ausreißsicherungsrings 50 beim weiteren Verpressen verhindert und gewährleistet, dass die Position der Umfangsnut 55 des Ausreißsicherungsrings 50 am Schlauchnippel 41 unverändert bleibt, nämlich so gegenüberliegend zur ersten Rippe 32 der Pressfassung 30, dass diese Rippe 32 durch den radial ausgeübten Druck die Metalleinlage 22 in die Umfangsnut 55 des Ausreißsicherungsrings eindrückt, was im Ergebnis zu einer sicheren Verbindung zwischen Pressfassung 30, Hochdruckschlauch 20 und Schlauchnippel 41 führt, nämlich zu einer unlösbaren metallischen Verbindung zwischen dem Schlauchnippel 41 mit dem Ausreißsicherungsring 50, der Metalleinlage 22 und der Rippe 32 der Pressfassung 30. Beim radialen Verpressen wird gleichzeitig der Kragen 35 der Pressfassung 30 in die Umfangsnut 46 am Kupplungselement 40 eingedrückt, was die Pressfassung 30 am Kupplungselement 40 sichert.

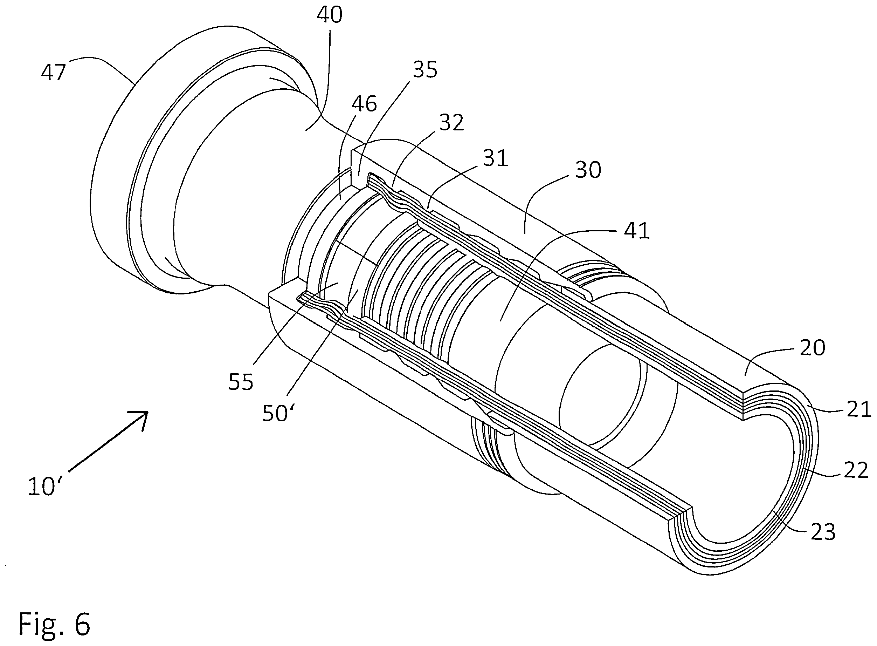

In den Fig. 6 bis Fig. 10 ist eine weitere Ausführungsform der erfindungsgemäßen Schlauchkupplung 10' gezeigt. Für die gleichen Bauteile wurden die gleichen Bezugszeichen verwendet. So wurde ein gleiches Kupplungselement 40, eine gleiche Pressfassung 30 und ein gleicher Hochdruckschlauch 20 verwendet. Es wird jedoch anders als beim ersten Ausführungsbeispiels ein geschlitzter Ring als Ausreißsicherungsring 50' eingesetzt.

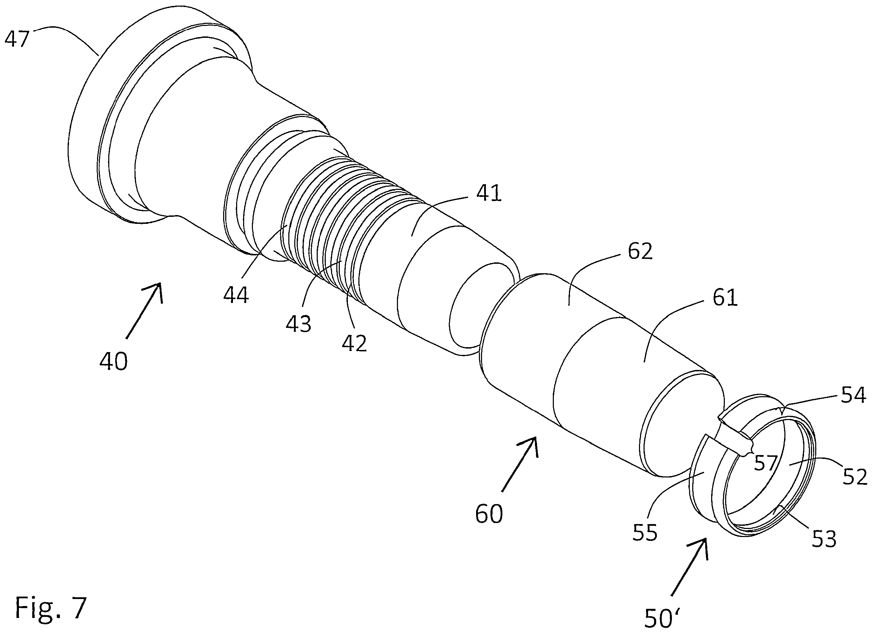

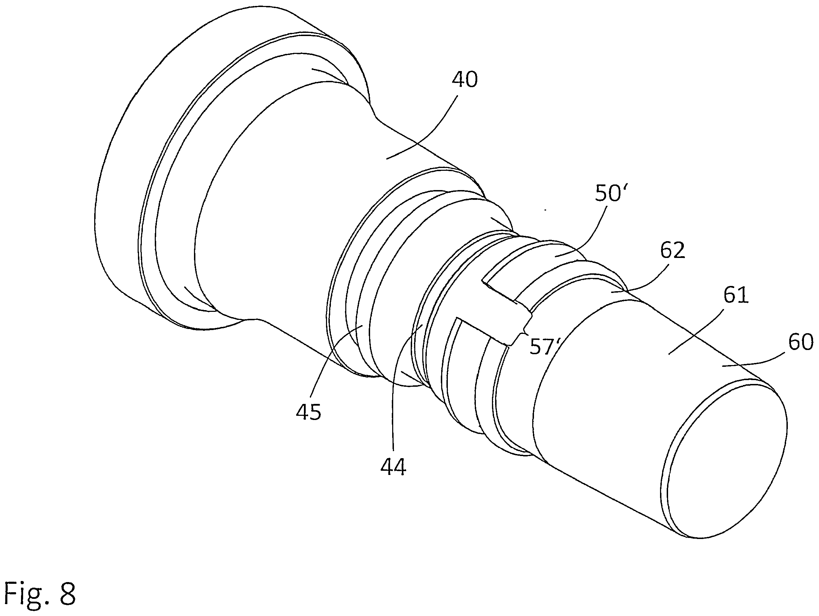

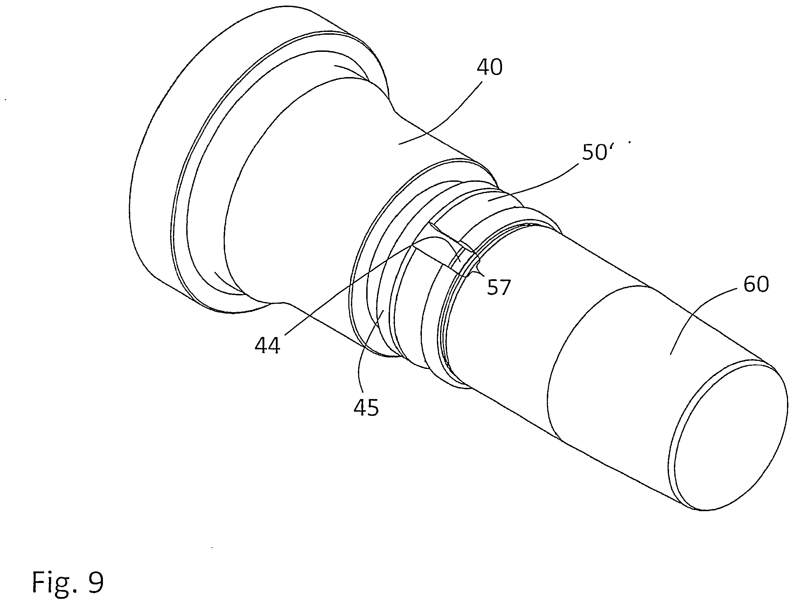

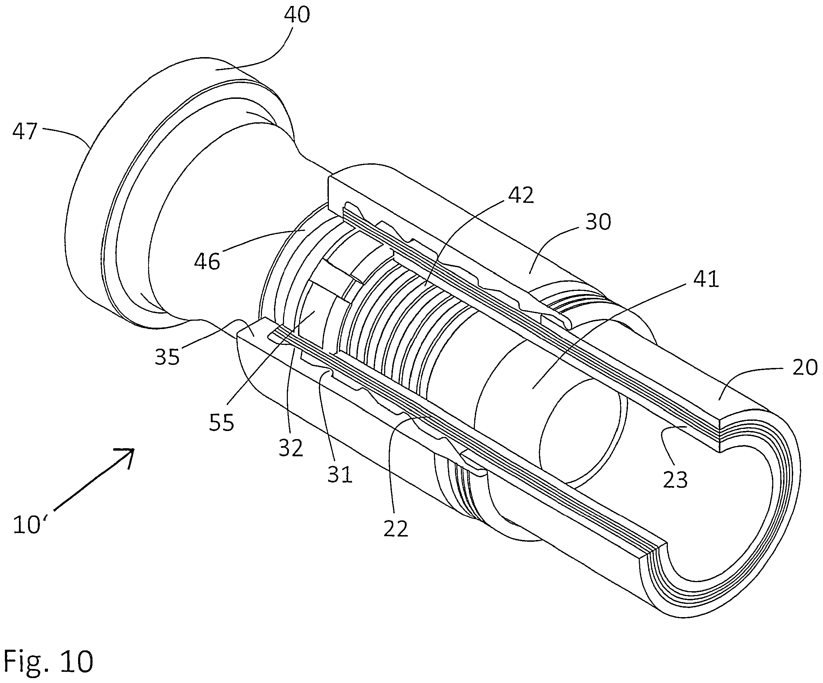

Auch in diesem Ausführungsbeispiel wird zur Positionierung des Ausreißsicherungsrings 50' die vom vorderen Ende 47 aus gesehen erste Vertiefungen 44 der an der äußeren Oberfläche vorgesehenen Vertiefungen 43 des Schlauchnippels 41 des Kupplungselementes 40 verwendet. Es ist auch möglich, dass mehrere Vertiefungen zur Fixierung eines geschlitzten Ausreißsicherungsrings herangezogen werden Der in Fig. 7 dargestellte Ausreißsicherungsring 50' besitzt zu seiner Positionierung am Schlauchnippel 41 an seiner Innenseite 52 Haltemittel 53. Diese Haltemittel 53 bestehen in diesem Fall aus einer radial nach innen gerichteten umlaufenden Rippe, die beim Aufschieben des Ausreißsicherungsrings 50' auf den Schlauchnippel 41 in die erste Vertiefung 44 eingedrückt werden kann. Zum Aufschieben des Ausreißsicherungsrings 50' auf den Schlauchnippel 41 wird eine Montagehülse 60 verwendet, die in Fig. 7 dargestellt ist. Sie besteht in diesem Beispiel aus Stahl, es sind jedoch auch andere, insbesondere verschleißfeste Materialien denkbar. Diese Montagehülse 60 besitzt zwei Bereiche 61, 62. Der konusförmige Bereich 61 hat am Ende der Montagehülse 60 seinen kleinsten Durchmesser. Beim Bereichs 61, der zum leichteren Aufschieben des Ausreißsicherungsrings 50' dient, ist der kleinste Durchmesser an den Innendurchmesser des entspannten Ausreißsicherungsrings 50', so wie er in Fig. 7 gezeigt ist, angepasst. Der Ausreißsicherungsring 50' besitzt einen Schlitz 57 und kann demzufolge leicht auf den Bereich 61 der Montagehülse 60 aufgeschoben werden. Durch weiteres Verschieben des Ausreißsicherungsrings 50' auf der Montagehülse 60 wird der Ausreißsicherungsring 50' aufgeweitet und gelangt in den zweiten Bereich 62 der Montagehülse 60. Der zweite Bereich 62 der Montagehülse dient zum Halten des Ausreißsicherungsrings 50' während der Montage. Die Montagehülse 60 wird zusammen mit dem Ausreißsicherungsring 50' auf den Schlauchnippel 41 aufgeschoben. Dazu ist der Innendurchmesser der Montagehülse 60 an den Außendurchmesser des Schlauchnippels 41 angepasst. Die Aufweitung des Ausreißsicherungsrings 50' wird sichtbar an dem nunmehr breiteren Schlitz 57', siehe Fig. 8. Die Montagehülse 60 kann an ihrer Innenseite des Weiteren einen Anschlag besitzen, der verhindert, dass die Montagehülse 60 bis an die Schulter 45 des Kupplungselementes 40 geschoben wird. In Fig. 8 ist die Endstellung einer solchen Montagehülse 60 gezeigt. Die Montagehülse 60 verdeckt bis auf die erste Vertiefung 44 alle Vertiefungen 43 des Schlauchnippels 41. Der auf der Montagehülse 60 gehaltene Ausreißsicherungsring 50' wird nachfolgend nach vorn geschoben, also in Richtung des vorderen Endes 47 des Kupplungselementes 40, rutscht dann von der Montagehülse 60 ab und gelangt in den vorbestimmten Bereich, wo er mittels des Haltemittels 53 in der ersten Vertiefung 44 vorfixiert ist, gezeigt in Fig. 9. In dieser Position ist der Ausreißsicherungsring 50' wieder entspannt, sichtbar an dem schmalen Schlitz 57. Der Innendurchmesser des Ausreißsicherungsrings 50' ist an den Außendurchmesser des Schlauchnippels 41 angepasst, insbesondere ist der Innendurchmesser des Ausreißsicherungsrings 50' im Bereich der Haltemittel 53 an den Außendurchmesser des Schlauchnippels 41 im Bereich der Vertiefung 44 angepasst. Der gezeigte Ausreißsicherungsring 50' besitzt des Weiteren an seiner Außenseite 54 eine Umfangsnut 55. Für größere Schlauchkupplungen können auch Ausreißsicherungen mit mehr als einer Umfangsnut vorgesehen werden. Ist der Ausreißsicherungsring 50', wie in Fig. 9 gezeigt, auf dem Schlauchnippel 41 aufgeschoben, so kann der vorbereitete Hochdruckschlauch 20 und die Pressfassung 30 einzeln oder zusammen auf den Schlauchnippel 41 in bekannter Weise aufgeschoben werden. Diese Lage ist in Fig. 10 gezeigt. Gegenüberliegend zur Umfangsnut 55 ist eine erste Rippe 32 der Pressfassung 30 angeordnet. Zur Erzielung der Befestigungslage der Schlauchkupplung 10', gezeigt in Fig. 6, wird auf die Pressfassung 30 in einer Spezialpresse gleichmäßig radial ein Druck ausgeübt, die Rippen 31 greifen in die Metalleinlage 22 des Hochdruckschlauchs 20 ein und drücken den Hochdruckschlauch 20 gegen den Schlauchnippel 41, der mit seinen Rippen 42 in den Innenmantel 23 des Hochdruckschlauchs 20 drückt. Beim radialen Verpressen wird gleichzeitig die ersten Rippe 32 der Pressfassung 30 in die Umfangsnut 55 des Ausreißsicherungsrings 50' eindrückt, was im Ergebnis zu einer sicheren Verbindung zwischen Pressfassung 30, Hochdruckschlauch 20 und Schlauchnippel 41 führt, nämlich zu einer unlösbaren metallischen Verbindung zwischen dem Schlauchnippel 41 mit dem metallischen, der Metalleinlage 22 und der Rippe 32 der Pressfassung 30. Beim radialen Verpressen wird gleichzeitig der Kragen 35 der Pressfassung 30 in die Umfangsnut 46 am Kupplungselement 40 eingedrückt, was die Pressfassung 30 am Kupplungselement 40 sichert. Die Befestigungslage ist in Fig. 6 zu sehen. Durch das radiale Verpressen wurde der Ausreißsicherungsring 50' geschlossen, der Schlitz 57 ist verschwunden. Hierzu ist der Schlitz 57 entsprechend anzupassen. Im vorliegenden Ausführungsbeispiel wurde bei einem Außendurchmesser des Schlauchnippels 41 von 10 mm eine Breite des Schlitzes 57 von 2,4 mm bei dem entspanntem Ausreißsicherungsrings 50' gewählt. Der Schlitz 57 wird vorzugsweise eher zu groß als zu klein bemessen.

Der Schlitz 57 ist im vorliegenden Ausführungsbeispiel axial ausgerichtet, es sind jedoch auch andere Schlitzformen und Anordnungen möglich.

Die dargestellten Ausführungsbeispiele zeigen, dass mit einer Standardkupplung ohne Ausreißsicherung durch die Verwendung eines erfindungsgemäßen nachrüstbaren Ausreißsicherungsrings 50, 50' eine Schlauchkupplung 10, 10' für höchste Druckanwendungen und für impulsartige Druckspitzen verwendbar ist.

Die Erfindung ist nicht auf die gezeigten Ausführungsbeispiele beschränkt. So kann der Ausreißsicherungsring 50, 50' entsprechend dem verwendeten Kupplungselement 40 und der Gestalt des Schlauchnippels 41 unterschiedlich gestaltet sein. Darüber hinaus können für eine Schlauchkupplung 10, 10' unterschiedliche Pressfassungen 30 verwendet werden, nämlich auch Pressfassungen, wie sie im europäischen Patentdokument EP 2 196 716 B1 gezeigt sind, bei denen die Rippen 31, 32 durch Wandverformungen der Pressfassung gestaltet sind, so dass gegenüberliegend zu den radial nach innen gerichteten Vorsprüngen auf der Außenseite Vertiefungen angeordnet sind.

### Bezugszeichenliste:

- 10. 10': Schlauchkupplung
- 20: Hochdruckschlauch
- 21: Kunststoffmantel
- 22: Metalleinlage
- 23: Kunststoffmantel
- 30: Pressfassung
- 31: Rippen
- 32: erste Rippe
- 33: hinteres Ende
- 34: vorderes Ende
- 35: Kragen
- 40: Kupplungselement
- 41: Schlauchnippel
- 42: Rippen
- 43: Vertiefungen
- 44: erste Vertiefung
- 45: Schulter
- 46: Umfangsnut
- 47: vorderes Ende
- 50, 50': Ausreißsicherungsring
- 51: zylindrischer Abschnitt
- 52: Innenseite
- 53: Haltemittel
- 54: Außenseite
- 55: Umfangsnut
- 56: Anschlagkante
- 57: Schlitz bei entspanntem Ausreißsicherungsring 50'
- 57': Schlitz bei aufgeweitetem Ausreißsicherungsring 50'
- 60: Montagehülse
- 61: Bereich von 60
- 62: Bereich von 60
- A: Sicherungsbereich
- B: Dichtbereich

## Patentansprüche

1. Schlauchkupplung (10), insbesondere für Hochdruckhydraulikleitungen oder Höchstdruckhydraulikleitungen,
- mit einem Hochdruckschlauch (20), bei dem zwischen zwei Kunststoffmänteln (21, 23) eine Metalleinlage (22) aus einem Drahtgeflecht oder aus mindestens einer Drahtspiralenwicklung angeordnet ist,
- mit einem rohrartigen Kupplungselement (40), das am vorderen Ende (47) an eine Armatur anschließbar ist und das am anderen Ende einen Schlauchnippel (41) zur Aufnahme des Hochdruckschlauchs (20) aufweist, welcher Schlauchnippel (41) an seinem Außenumfang mehrere in Achsrichtung hintereinanderliegende radial verlaufende Vertiefungen (43) und zwischen den Vertiefungen (43) zum Hochdruckschlauch (20) gerichtete Rippen (42) besitzt,
- wobei der Anschlussbereich für den Hochdruckschlauch (20) in der Schlauchkupplung (10) zwei Bereiche umfasst, nämlich einen vorderen Sicherungsbereich (A) mit einer Ausreißsicherung und einen sich in Axialrichtung anschließenden Dichtbereich (B),
- mit einer unter radialem Druck verformbaren Pressfassung (30), wobei die Pressfassung (30) an ihrem Innenmantel zum Hochdruckschlauch (20) gerichtete Rippen (31, 32) aufweist, wobei mindestens eine größer dimensionierte Rippe (32) im Sicherungsbereich (A) vorgesehen ist,
- wobei im Sicherungsbereich (A) die von den Kunststoffmänteln (21, 23) befreite Metalleinlage (22) zwischen dem Schlauchnippel (41) und Pressfassung (30) verpresst ist,
**dadurch gekennzeichnet, dass**
- für die Ausreißsicherung im Sicherungsbereich (A) ein auf den Schlauchnippel (41) aufschiebbarer und am Schlauchnippel (41) fixierbarer Ausreißsicherungsring (50, 50') vorgesehen wird, welcher vor dem Verpressen aus einem zylindrischen Abschnitt besteht und an seiner Außenseite (54) mindestens eine Umfangsnut (55) besitzt,
- wobei in der Montagelage der Schlauchkupplung (10) die Umfangsnut (55) radial nach außen gerichtet und gegenüberliegend zu der größer dimensionierten Rippe (32) an der Pressfassung (30) angeordnet ist und beim radialen Verpressen zur Aufnahme von Material der Metalleinlage (22) des Hochdruckschlauchs (20) dient,
- so dass in Befestigungslage eine kraft- und formschlüssige Verbindung zwischen der Rippe (32) der Pressfassung (30), der Metalleinlage (22) des Hochdruckschlauchs (20), dem Ausreißsicherungsring (50, 50') im Bereich der Umfangsnut (55) und dem Schlauchnippel (41) vorliegt.

2. Schlauchkupplung nach Anspruch 1, **dadurch gekennzeichnet, dass** der Ausreißsicherungsring (50, 50') aus Metall besteht und eine unlösbare metallische Verbindung zwischen der Rippe (32) der Pressfassung (30), der Metalleinlage (22) des Hochdruckschlauchs (20), dem Ausreißsicherungsring (50, 50') und dem Schlauchnippel (41) vorliegt.

3. Schlauchkupplung nach Anspruch 1 oder 2, **dadurch gekennzeichnet, dass** der Ausreißsicherungsring (50, 50') aus einem zylindrischen Abschnitt (51) besteht, der mit Haltemittel (53) zur Positionierung und/oder Festlegung am Schlauchnippel (41) versehen ist, wobei die Haltemittel (53) vorzugsweise integral mit dem zylindrischen Abschnitt (51) ausgebildet sind.

4. Schlauchkupplung nach Anspruch 3, **dadurch gekennzeichnet, dass** die Haltemittel (53) an der Innenseite (52) des Ausreißsicherungsrings (50) vorgesehen sind, um zur Fixierung am Schlauchnippel (41) in eine Vertiefung (43) des Schlauchnippels (41) eingreifen zu können.

5. Schlauchkupplung nach Anspruch 4, **dadurch gekennzeichnet, dass** die Haltemittel (53) einen oder mehrere radial nach innen gerichtete Vorsprünge umfassen, vorzugsweise eine radial nach innen gerichtete, umlaufenden Rippe bilden.

6. Schlauchkupplung nach Anspruch 3, **dadurch gekennzeichnet, dass** eine Magnetisierung des Ausreißsicherungsrings (50) als Haltemittel vorgesehen ist.

7. Schlauchkupplung nach einem der Ansprüche 1 bis 6, **dadurch gekennzeichnet, dass** der Ausreißsicherungsring (50, 50') im montierten Zustand an einer Schulter (45) des Kupplungselementes (40) anliegt.

8. Schlauchkupplung nach einem der Ansprüche 1 bis 7, **dadurch gekennzeichnet, dass** der Ausreißsicherungsring (50) aus einem umfangsseitig geschlossenen zylindrischen Abschnitt (51) besteht und durch radiales Anpressen an dem Schlauchnippel (41) vormontiert vorliegt.

9. Schlauchkupplung nach einem der Ansprüche 1 bis 7, **dadurch gekennzeichnet, dass** der Ausreißsicherungsring (50') aus einem elastischen zylindrischen Abschnitt besteht, vorzugsweise aus einem zylindrischen Abschnitt mit Schlitz (57, 57').

10. Schlauchkupplung nach einem der Ansprüche 1 bis 7, **dadurch gekennzeichnet, dass** der Ausreißsicherungsring aus einem zylindrischen Abschnitt besteht, welcher aus mehreren Ringschalenstücken zusammengesetzt ist, vorzugsweise aus zwei Halbschalen.

11. Schlauchkupplung nach Anspruch 1, **dadurch gekennzeichnet, dass** der Ausreißsicherungsring (50, 50') aus hochfestem Kunststoff hergestellt ist.

12. Schlauchkupplung nach einem der Ansprüche 1 bis 11, **dadurch gekennzeichnet, dass** im Dichtbereich (B) der vom äußeren Kunststoffmantel (21) befreite Hochdruckschlauch (20) zwischen Schlauchnippel (41) und Pressfassung (30) verpresst ist.

13. Schlauchkupplung nach einem der Ansprüche 1 bis 12, **dadurch gekennzeichnet, dass** die Pressfassung (30) am vorderen Ende (34) einen radial nach innen gerichteten Kragen (35) besitzt, der in eine Umfangsnut (46) des Kupplungselementes (40) eingreift.

14. Schlauchkupplung nach einem der Ansprüche 1 bis 13, **dadurch gekennzeichnet, dass** die Pressfassung (30) mit ihrem hinteren Ende über den Dichtbereich (B) hinaus verlängert ist und mit diesem Verlängerungsbereich den gesamten Hydraulikschlauch (20) mit seinen zwei Kunststoffmänteln (21, 23) und der Metalleinlage (22) umfasst.

15. Schlauchkupplung nach einem der Ansprüche 1 bis 14, **dadurch gekennzeichnet, dass** im Montagefall der Ausreißsicherungsring (50, 50') auf dem Schlauchnippel (41) vorpositioniert ist und die Pressfassung (30) den Schlauchnippel (41) einschließlich Ausreißsicherungsring (50, 50') mit dem aufgeschobenen Hydraulikschlauch (20) umgreift und im Befestigungsfall die Pressfassung (30) mit den Rippen (31, 32) an den Hydraulikschlauch (20) angreift, wobei die Schlauchkupplung (10) durch Anwendung eines äußeren radialen Druckes auf die Pressfassung (30) von dem Montagefall in den Befestigungsfall überführbar ist.

## Claims

1. Hose coupling (10), in particular for high pressure hydraulic lines or maximum pressure hydraulic lines,
- with a high pressure hose (20), in which a metal insert (22) made of a wire mesh or of at least one wire spiral winding is arranged between two plastic sheaths (21, 23),
- with a tubular coupling element (40), which can be connected at the front end (47) to a fitting and which has a hose nipple (41) at the other end for receiving the high pressure hose (20), which hose nipple (41) at its outer circumference has several radially extending recesses (43) located one behind the other in the axial direction and ribs (42) directed to the high pressure hose (20) between the recesses (43),
- wherein the connecting region for the high pressure hose (20) in the hose coupling (10) comprises two areas, namely a front securing area (A) with a tear-off protection and a sealing area (B) adjacent in the axial direction,
- with a press socket (30) deformable under radial pressure, wherein the press socket (30) at its inner surface has ribs (31, 32) directed to the high pressure hose (20), wherein at least one rib (32) of larger dimensions is provided in the securing area (A),
- wherein in the securing area (A) the metal insert (22) freed from the plastic sheaths (21, 23) is pressed between the hose nipple (41) and press socket (30),
**characterised in that**
- for the tear-off protection in the securing area (A) a tear-off protection ring (50, 50') is provided which can be pushed onto the hose nipple (41) and fixed to the hose nipple (41), which consists of a cylindrical section before the pressing and has at least one circumferential groove (55) on its outer side (54),
- wherein in the assembly position of the hose coupling (10), the circumferential groove (55) is directed radially outwards and is arranged at the press socket (30) opposite to the rib (32) of larger dimensions and serves to receive material of the metal insert (22) of the high pressure hose (20) during radial pressing,
- so that in the mounting position, there is a force- and form-fitting connection between the rib (32) of the press socket (30), the metal insert (22) of the high pressure hose (20), the tear-off protection ring (50, 50') in the area of the circumferential groove (55) and the hose nipple (41).

2. Hose coupling according to claim 1, **characterised in that** the tear-off protection ring (50, 50') consists of metal and there is a non-detachable metallic connection between the rib (32) of the press socket (30), the metal insert (22) of the high pressure hose (20), the tear-off protection ring (50, 50') and the hose nipple (41).

3. Hose coupling according to claim 1 or 2, **characterised in that** the tear-off protection ring (50, 50') consists of a cylindrical section (51), which is provided with holding means (53) for the positioning at and/or securing to the hose nipple (41), wherein the holding means (53) are preferably integrally formed with the cylindrical section (51).

4. Hose coupling according to claim 3, **characterised in that** the holding means (53) are provided on the inside (52) of the tear-off protection ring (50) in order to be able to engage in a recess (43) of the hose nipple (41) for fixing to the hose nipple (41).

5. Hose coupling according to claim 4, **characterised in that** the holding means (53) comprise one or several projections directed radially inwards, preferably a circumferential rib directed radially inwards.

6. Hose coupling according to claim 3, **characterised in that** a magnetisation of the tear-off protection ring (50) is provided as a holding means.

7. Hose coupling according to one of claims 1 to 6, **characterised in that** the tear-off protection ring (50, 50') in the mounted state abuts against a shoulder (45) of the coupling element (40).

8. Hose coupling according to one of claims 1 to 7, **characterised in that** the tear-off protection ring (50) consists of a circumferentially closed cylindrical section (51) and is pre-mounted on the hose nipple (41) by radial pressing.

9. Hose coupling according to one of claims 1 to 7, **characterised in that** the tear-off protection ring (50') consists of an elastic cylindrical section, preferably of a cylindrical section with a slot (57, 57').

10. Hose coupling according to one of claims 1 to 7, **characterised in that** the tear-off protection ring consists of a cylindrical section, which is composed of several annular shell pieces, preferably of two half-shells.

11. Hose coupling according to claim 1, **characterised in that** the tear-off protection ring (50, 50') is made of high-strength plastic.

12. Hose coupling according to one of claims 1 to 11, **characterised in that** in the sealing area (B), the high pressure hose (20) freed from the outer plastic sheath (21) is pressed between hose nipple (41) and press socket (30).

13. Hose coupling according to one of claims 1 to 12, **characterised in that** the press socket (30) at the front end has a collar (35) directed radially inwards, which engages in a circumferential groove (46) of the coupling element (40).

14. Hose coupling according to one of claims 1 to 13, **characterised in that** the press socket (30) is extended with its rear end beyond the sealing area (B) and comprises with this extended area the entire hydraulic hose (20) with its two plastic sheaths (21, 23) and the metal insert (22).

15. Hose coupling according to one of claims 1 to 14, **characterised in that**, during assembly, the tear-off protection ring (50, 50') is pre-positioned on the hose nipple (41) and the press socket (30) surrounds the hose nipple (41) including the tear-off protection ring (50, 50') with the hydraulic hose (20) slid thereon and, during fixing, the press socket (30) with the ribs (31, 32) engages with the hydraulic hose (20), wherein the hose coupling (10) can be transferred from assembly to fixing by applying an external radial pressure onto the press socket (30).

## Revendications

1. Raccord (10) de flexible, notamment pour conduites hydrauliques haute pression et conduites hydrauliques très haute pression,
- comprenant un flexible haute pression (20) dans lequel est disposée, entre deux gaines (21, 23) en matière plastique, une garniture métallique (22) composée de fils tressés ou au moins d'un fil enroulé en spirale,
- comprenant un élément de raccord (40) de type tubulaire raccordable par l'extrémité avant (47) à une robinetterie et qui présente à l'autre extrémité un nipple (41) de flexible servant à recevoir le flexible haute pression (20), lequel nipple (41) de flexible possède sur sa circonférence extérieure plusieurs creux (43) au tracé radialement juxtaposé dans le sens axial et, entre les creux (43), des nervures (42) dirigées vers le flexible haute pression (20),
- sachant que la zone de raccordement du flexible haute pression (20) dans le raccord (10) de flexible comprend deux zones, à savoir une zone de sécurisation avant (A) comprenant une sécurisation anti-arrachement et une zone d'étanchéité (B) la jouxtant dans le sens axial,
- comprenant une monture sertie (30) déformable sous une pression radiale, sachant que la monture sertie (30) présente, contre sa gaine intérieure, des nervures (31, 32) orientée en direction du flexible haute pression (20), sachant qu'au moins une nervure (32) de grande dimension est prévue dans la zone de sécurisation (A),
- sachant que dans la zone de sécurisation (A) la garniture métallique (22) débarrassée des gaines (21, 23) en matière plastique est sertie entre le nipple (41) de flexible et la monture sertie (30),
**caractérisé en ce**
- **que** pour la sécurisation anti-arrachement est prévue dans la zone de sécurisation (A) une bague (50, 50') de sécurisation anti-arrachement enfilable sur le nipple (41) de flexible et immobilisable contre le nipple (41) de flexible, bague qui avant le sertissage se compose d'un segment cylindrique et qui possède sur son côté extérieur (54) au moins une gorge circonférentielle (55),
- sachant que dans la position de montage du raccord (10) de flexible, la gorge circonférentielle (55) est dirigée radialement vers l'extérieur et en face de la nervure (32) de plus grande dimension contre la monture sertie (30) et que lors du sertissage radial elle sert à recevoir le matériau de la garniture métallique (22) du flexible haute pression (20),
- de sorte qu'en position de fixation il y a présence d'une liaison par adhérence de forces et de formes entre la nervure (32) de la monture sertie (30), la garniture métallique (22) du flexible haute pression (20) et la bague de sécurisation anti-arrachement (50, 50') dans la zone de la gorge circonférentielle (55) et le nipple (41) de flexible.

2. Raccord de flexible selon la revendication 1, **caractérisé en ce que** la bague de sécurisation anti-arrachement (50, 50') est en métal et qu'il y a présence d'une liaison métallique condamnée entre la nervure (32) de la monture sertie (30), la garniture métallique (22) du flexible haute pression (20), la bague de sécurisation anti-arrachement (50, 50') et le nipple (41) de flexible.

3. Raccord de flexible selon la revendication 1 ou 2, **caractérisé en ce que** la bague de sécurisation anti-arrachement (50, 50') se compose d'un segment cylindrique (51) muni d'un moyen de retenue (53) pour le positionnement et/ou l'immobilisation contre le nipple (41) de flexible, sachant que les moyens de retenue (53) sont de préférence entièrement formés par le segment cylindrique (51).

4. Raccord de flexible selon la revendication 3, **caractérisé en ce que** les moyens de retenue (53) sont prévus contre le côté intérieur (52) de la bague de sécurisation anti-arrachement (50) pour pouvoir engrener, dans un but d'immobilisation contre le nipple (41) de flexible, dans un creux (43) du nipple (41) de flexible.

5. Raccord de flexible selon la revendication 4, **caractérisé en ce que** les moyens de retenue (53) comprennent une ou plusieurs saillies dirigées radialement vers l'intérieur, de préférence une nervure circonférentielle dirigée radialement vers l'intérieur.

6. Raccord de flexible selon la revendication 3, **caractérisé en ce qu'**une magnétisation de la bague de sécurisation anti-arrachement (50) est prévue comme moyen de retenue.

7. Raccord de flexible selon l'une des revendications 1 à 6, **caractérisé en ce que** la bague de sécurisation anti-arrachement (50, 50') applique, à l'état monté, contre un épaulement (45) de l'élément raccord (40).

8. Raccord de flexible selon l'une des revendications 1 à 7, **caractérisé en ce que** la bague de sécurisation anti-arrachement (50) se compose d'un segment (51) cylindrique fermé du côté circonférentiel et qu'elle est présente prémontée par sertissage radial contre le nipple (41) de flexible.

9. Raccord de flexible selon l'une des revendications 1 à 7, **caractérisé en ce que** la bague de sécurisation anti-arrachement (50') se compose d'un segment cylindrique élastique, de préférence d'un segment cylindrique avec fente (57, 57').

10. Raccord de flexible selon l'une des revendications 1 à 7, **caractérisé en ce que** la bague de sécurisation anti-arrachement se compose d'un segment cylindrique composé de plusieurs parties d'une coque de bague, de préférence de deux demi-coques.

11. Raccord de flexible selon la revendication 1, **caractérisé en ce que** la bague de sécurisation anti-arrachement (50, 50') est fabriquée en matière plastique haute résistance.

12. Raccord de flexible selon l'une des revendications 1 à 11, **caractérisé en ce que** dans la zone d'étanchéité (B) le flexible haute pression (20) débarrassé de la gaine extérieure (21) en matière plastique est serti entre le nipple (41) de flexible et la monture sertie (30).

13. Raccord de flexible selon l'une des revendications 1 à 12, **caractérisé en ce que** la monture sertie (30) possède en son extrémité avant (34) un collet (35) dirigé radialement vers l'intérieur qui engrène dans une gorge circonférentielle (46) de l'élément raccord (40).

14. Raccord de flexible selon l'une des revendications 1 à 13, **caractérisé en ce que** la monture sertie (30) est prolongée par son extrémité arrière au-delà de la zone d'étanchéité (B) et qu'elle enserre avec cette zone de prolongement l'ensemble du flexible hydraulique (20) avec ses deux gaines en plastique (21, 23) et la garniture métallique (22).

15. Raccord de flexible selon l'une des revendications 1 à 14, **caractérisé en ce qu'**en cas de montage la bague de sécurisation anti-arrachement (50, 50') est positionnée d'avance sur le nipple (41) de flexible et que la monture sertie (30) enserre le nipple (41) de flexible, y compris la bague de sécurisation anti-arrachement (50, 50') avec le flexible hydraulique (20) enfilé et qu'en cas de fixation la monture sertie (30) attaque par les nervures (31, 32) le flexible hydraulique (20), sachant que le raccord de flexible (10) peut être transféré, en appliquant une pression radiale externe sur la monture sertie (30), du cas de montage vers le cas de fixation.
